# EUROPEAN PATENT SPECIFICATION

(11) **EP 0 695 233 B1**
(45) Date of publication and mention of the grant of the patent: **09.08.2000**
(21) Application number: 94914227.7
(22) Date of filing: 20.04.1994
(51) Int. Cl.: B32B 3/00, B32B 7/00, B32B 27/32, B32B 27/08, B65D 65/40

(54) **MULTILAYER PACKAGING FILMS**
MEHRSCHICHTIGER VERPACKUNGSFILM
FILMS DE CONDITIONNEMENT MULTICOUCHES

(30) Priority: 21.04.1993 US 51120
(43) Date of publication of application: 07.02.1996
(73) Proprietor: MOBIL OIL CORPORATION, Fairfax, Virginia 22037-0001 (US)
(72) Inventor: BALLONI, Riccardo, I-Milano (IT); TSAI, Mingliang Lawrence, New Jersey 07733 (US)
(74) Representative: Lawrence, Peter Robin Broughton
(86) International application number: US9404346
(87) International publication number: WO9423941

(56) References cited:
- EP-A- 0 118 060
- EP-A- 0 208 075
- EP-A- 0 501 441
- US-A- 4 377 616
- US-A- 4 966 795
- US-A- 5 153 074
- DATABASE WPI Section Ch, Week 9219 Derwent Publications Ltd., London, GB; Class A17, AN 92-154499 & JP-A-04 090 336 ( OJI YUKA GOSEISHI KK) , 24 March 1992

## Description

This invention relates to a multilayer film structure which can be metallized and laminated to another film.

Structures of the present invention are employed mainly as packaging films utilized in the overwrapping of products or in the formation of bags, cartons or pouch-type containers to contain various food or non-food products. It is necessary that the film structures utilized for this purpose be as resistant to the transmission of moisture, air and deleterious flavours as possible. No single polymeric film material has the characteristics in and of itself to satisfy this requirement.

EP-A-0118060 discloses a multilayer film comprising an inner barrier containing EVOH, an adhesive-promoting layer of a modified polyolefin, a base layer of polypropylene, and an outer, sealable layer. The inner barrier layer serves as a barrier to gases including oxygen and aromas.

US-5,153,074 discloses a metallised film combination comprising a polymer substrate, overlaid with maleic acid anhydride modified propylene, which is in turn overlaid with a layer containing ethylene vinyl alcohol copolymers, to which an aluminium layer is applied. This film is said to have improved gas barrier properties and has a low permeability to moisture.

It is an object of the invention to present a multilayer packaging film structure having the characteristics to minimize to a large extent the transmission of gases, water vapour, and flavours through such a film.

In accordance with the present invention a biaxially oriented multilayer structure comprises:
(A) a core layer of polypropylene which is oriented greater in the transverse direction than in the machine direction and which has dispersed therein microspheres sufficient in size and quantity so that, during orientation the core layer becomes opaque as a result of formation of voids, which either includes a minor proportion of a maleic anhydride modified polypropylene blended therein and/or has a skin layer (B) of maleic anhydride modified polypropylene on one size;
(C) a layer of ethylene vinyl alcohol (EVOH) copolymer on the maleic anhydride modified polypropylene containing layer, and
(D) on the other side of the care layer a heat sealable or printable skin layer; wherein the film structure carries a metal layer on the EVOH copolymer layer.

It is further preferred that a polymeric film be laminated to the metallized layer so as to add additional gauge, stiffness, puncture resistance and barrier properties to the structure.

In forming the multilayer film structure of the present invention, a core layer of polypropylene having dispersed therein microspheres sufficient in size and quantity so that during orientation the core layer becomes opaque. This core layer can be as described in U.S. 4,377,616, The preferred polypropylene matrix material has the following characteristics: density 0.90 to 0.91 g/cc: m.p. 160°C or higher; melt flows 2 to 4g/10 min at 230°C. The preferred microspheres are those disclosed in the above mentioned patent and particularly preferred are microspheres of polybutylene terephthalate, and nylon.

The skin layer of maleic anhydride modified polypropylene which is coextruded on one side of the core layer may be prepared by any process, for example, that disclosed in U.S. 3,433,777; and 4,198,327. A commercially available maleated polypropylene or propylene copolymer has the following physical characteristics: density 0.89 to 0.91 (ASTM D1505), Vicat softening point 100 to 150°C (ASTM D1525); Shore hardness 50 to 70 (ASTM D2240); melting point 140 to 160°C (ASTM D2117). It is essential to use maleated polypropylene in order to tie the core layer with the EVOH when they are incompatible in their natural state.

The ethylene vinyl alcohol copolymer referred to herein can be obtained from any commercial source. For example, extrusion grade ethylene vinyl alcohol copolymer (EVOH) is available under the name EVAL (Registered Trademark) from Kuraray Co. Ltd. of Japan. EVOH resin is conventionally prepared by saponifying ethylene vinyl acetate copolymer containing an ethylene content of from 20 to 70 mole %, to a saponification degree of 90% or higher. The ethylene vinyl alcohol copolymer employed herein can have a ethylene content ranging from 20 to 70 mole %.

The heat sealable layer employed herein and applied during coextrusion can be an ethylene propylene (EP) copolymer or an ethylene propylene butene-1 (EPB) terpolymer, which will be located on the side of the substrate opposite to the EVOH layer. The ratio of ethylene to propylene to butene-1 can be up to 15% ethylene, 70 to 100% propylene and 0 to 15% butene-1, e.g., 2% ethylene 94% polypropylene and 4% butene-1.

The printable surface can be any polymer such as polyolefin homopolymer; copolymer and terpolymer; polycarbonate; or polyester. The characteristics of the printable surface is one with a surface free energy of 34 dynes/cm or higher.

As will be shown below in the specific Examples, the utilization of the EVOH in combination with the metallization of the EVOH and the further coating of the metallization layer with an appropriate lamination film will progressively improve oxygen barrier, water vapor barrier and aroma barrier characteristics over structures not containing these modifications. The Examples will also show that structures within the scope of the present invention can form hermetic seals. Metallization, which occurs directly on the EVOH, is accomplished by conventional vacuum deposition. While aluminum is illustrated as the preferred metal it is to be understood that other metals such as zinc and gold, capable of being commercially vapor deposited, can also be employed. Also while polypropylene has been shown as the laminate film to the surface of the metal layer this is merely by way of illustration. It is to be understood that other films such as other polyolefins, i.e., polyethylene; polybutylene; olefin copolymers; polyamides; polycarbonate; and polyacrylonitrile can also be employed. In forming such laminations an effective adhesive is a hot melt low density polyethylene applied in an amount of about 4.5 kg (10 pounds) per ream. Other suitable adhesives can also be employed. Only examples 2 and 3 and 5 fall within the scope of present claims.

### COMPARATIVE EXAMPLE 1

A four layer biaxially oriented film, having an approximate final thickness of 36 µm (1.4 mil) was prepared by coextruding a core matrix of polypropylene (melt flow 3.0), blended with about 8 wt.% of polybutylene terephthalate (PBT) microspheres. This core comprised about 91% of the coextruded thickness. A skin layer of the maleic anhydride modified polypropylene was coextruded on one side of the core comprising about 1.5% of the total extruded thickness and a lower skin surface of a heat sealable ethylene-propylene-butene-1 terpolymer comprising 3.5% of the total thickness of the extrudate. The fourth layer of the coextrudate is a metal receiving layer of polypropylene comprising 4% of the total extrudate thickness, extruded on the surface of the maleic anhydride modified polypropylene.

The coextrudate was quenched at 30-50°C, reheated to 115-125°C and stretched in the machine direction 5 times using transport rolls operating at different speeds. Thereafter, the film was transversely oriented 8 times at a temperature profile ranging from 155°-180°C. During this latter orientation the film stricture turned opaque. Thereafter, the metal receiving polypropylene layer was surface treated with corona discharge. Alternatively the surface can be flame treated to the appropriate surface free energy conducive for metal adhesion.

The film was metallized by vacuum deposition of aluminum and tested for metal pick-off by Scotch 610 tape (Registered Trademark of 3M Corp). To test the metal adhesion, strips of Scotch 610 (Registered Trademark of 3M Corp) tape were applied to the metallized surface. The tape was pulled manually. The tape pull test was repeated 3 times with fresh tape applied to the same area.

Table 1, below, shows the film properties prior to metallization. Table 2 shows the properties after metallization.

The metallized upper layer was subsequently laminated to a layer of polypropylene film approximately 0.75 mil thick. This was adhesively bonded with 4.5 kg (10 pounds) per ream of molten LDPE adhesive at a melt temperature of 325°C in a laminating machine. Table 3 shows the resultant laminate properties.

### EXAMPLE 2

A four layer biaxially oriented film structure was prepared in the following manner: The same polypropylene core matrix with PBT as employed in comparative Example 1 was coextruded with the same maleic anhydride modified polypropylene in the same dimensions on one side of said core and on the modified polypropylene layer, a layer of EVOH with 48 mole % ethylene content, was simultaneously coextruded thereon. On the opposite side of the core the same heat sealable resin as in comparative Example 1 was applied in the same thickness. This four layer coextrudate was quenched at 30-50°C, reheated to 115-125°C and stretched in the machine direction 5 times using transport rolls operating at different speeds. Thereafter, the film was transversely oriented 8 times at a temperature profile ranging from 155°C-180°C. Thereafter, the EVOH layer was corona discharge treated. Subsequently, the EVOH layer was metallized in the manner of comparative Example 1. The metallized structure was then laminated as in comparative Example 1.

### EXAMPLE 3

A four layer biaxially oriented film structure identical to that of Example 2 except the EVOH layer is 2% rather than 4% of the thickness prior to metallization and the heat seal ethylene-propylene-butene-1 layer is 11.5% of the thickness rather than 3.5% prior to metallization.

### COMPARATIVE EXAMPLE 4

A four layer biaxially oriented film prepared as in comparative Example 1, except that the metallizing layer was not corona discharge treated. The film was metallized as in comparative Example 1. The metallized upper layer was subsequently laminated to a three layer unbalanced oriented HDPE film having an approximate final thickness of 30 µm (1.15 mils). This three layer structure consisted of a primary high density polyethylene core layer wherein the core comprised 83% of the film thickness. On one surface of the core was a heat seal layer of ethylene-propylene-butene-1 terpolymer which comprises 3% of the total thickness of this three layer structure. The other surface of this core layer comprised 14% of the overall film thickness and was also ethylene- propylene-butene-1 terpolymer. This three layer structure was laminated to the metallized surface with 4.5 kg (10 pounds)per ream of molten LDPE (density 0.90-0.92) at a melt temperature of 325°C employing a commercial polylaminating machine.

### EXAMPLE 5

A four layer biaxially oriented film having an approximate final thickness of 36 µm (1.40 mil) was prepared by coextruding a polypropylene core matrix blended with about 8 wt.% of polybutylene terethphlate (PBT) microspheres. The core matrix made up 95% of the film thickness. An adhesion promoting layer of a maleic anhydride modified polypropylene (with a melt flow of 3.0) comprising 1.5% of the total thickness. On the opposite surface of the core was coextruded a printable surface layer of high density polyethylene comprising 1.5% of the total thickness. On the surface of the modified polypropylene there was simultaneously coextruded a surface layer of EVOH copolymer with 48 mole % ethylene content. After the desired machine direction orientation the film was transversely oriented 8 times at a temperature profile ranging from 155°-180°C which produced a visible white opaque appearance. Thereafter, the printable high density polyethylene layer was corona discharge treated to a level of 38 dynes per cm. Following this, the EVOH layer was metallised, and the same three layer lamination web structure as employed in comparative Example 4 was laminated to the aluminum surface in the same manner as comparative Example 4. Tables 1, 2 and 3 show the results of the characteristics of the several films.

**TABLE 1**

| Film Properties Prior to Metallization | | | | | | |
|---|---|---|---|---|---|---|
| EXAMPLE OR COMPARATIVE EXAMPLE | TREATMENT LEVEL DYNES/CM | WATER VAPOR TRANS* | OXYGEN TRANS** | METAL PICKOFF% | AROMA BARRIER | HERMETIC SEAL |
| 1 | 38 | 0.40 | 125 | 80 | NO | NO |
| 2 | >52 | 0.43 | 3.3 | 0 | YES | NO |
| 3 | >52 | 0.43 | 7 | 0 | YES | YES |
| 4 | 29 | 0.40 | 125 | 100 | NO | NO |
| 5 | 42 | 0.43 | 7 | 0 | YES | NO |

| | | | | | | |
|---|---|---|---|---|---|---|
| * gH₂O/100 in.²/24 hrs. or gH₂O/6.5 x 10⁻²m²/24h | | | | | | |
| ** ccO₂/100 in.²/24 hrs. or cm³O₂/6.5 x 10⁻²m²/24h | | | | | | |

**TABLE 2**

| Film Properties After Metallization | | | | | | |
|---|---|---|---|---|---|---|
| EXAMPLE OR COMPARATIVE EXAMPLE | LIGHT TRANSMIS | WATER VAPOR TRANS* | OXYGEN TRANS** | AROMA BARRIER | HERMETIC SEALS | LAMINATION BONDS |
| 1 | <1% | 0.15 | 42 | NO | NO | 80 |
| 2 | <1% | 0.01 | 0.01 | YES | NO | 200 |
| 3 | <1% | 0.015 | 0.015 | YES | YES | 180 |
| 4 | <1% | 0.25 | 100 | NO | NO | 50 |
| 5 | <1% | 0.005 | 0.01 | YES | NO | 200 |

| | | | | | | |
|---|---|---|---|---|---|---|
| * gH₂O/100 in.²/24 hrs. or gH₂O/6.5 x 10⁻²m²/24h | | | | | | |
| ** ccO₂/100 in.²/24 hrs. or cm³O₂/6.5 x 10⁻²m²/24h | | | | | | |

**TABLE 3**

| Film Properties After Lamination | | | | | | |
|---|---|---|---|---|---|---|
| EXAMPLE OR COMPARATIVE EXAMPLE | LIGHT TRANSMIS | WATER VAPOR TRANS* | OXYGEN TRANS** | AROMA BARRIER | HERMETIC SEALS | POUCH MACHINABIL |
| 1 | <1% | 0.10 | 42 | NO | NO | ACCEPTABLE |
| 2 | <1% | 0.01 | 0.01 | YES | NO | ACCEPTABLE |
| 3 | <1% | 0.015 | 0.015 | YES | YES | ACCEPTABLE |
| 4 | <1% | 0.25 | 100 | NO | YES | EXCELLENT |
| 5 | <1% | 0.005 | 0.01 | YES | YES | EXCELLENT |

| | | | | | | |
|---|---|---|---|---|---|---|
| * gH₂O/100 in.²/24 gH₂O/6.5 x 10⁻²m²/24h | | | | | | |
| ** ccO₂/100 in.²/24 cm³O₂/6.5 x 10⁻²m²/24h | | | | | | |

In Tables 2 and 3 under the heading "Aroma Barrier" there is an indication as to whether or not the film samples are an effective barrier to aromas. In order to test the effectiveness of the film structures in excluding deleterious odors, flavors and aromas from a product suspectable of absorbing such flavors, etc., several packages were wrapped and sealed with the film. All of the packages were placed in a controlled environment which exposed them to an aromatic hydrocarbon that provided a typical or potential odorant that can be readily identified chemically and measured quantitively. In this case the aromatic hydrocarbon was toluene. Individual packages were withdrawn from the controlled environment in a timed sequence. A small air sample was then taken from within the package with a hypodermic syringe. The sample was analyzed chromographically. The chronographic peak stayed low as time progressed and raised only slowly at longer times. The test was carried out over a time period of from 0-200hrs. This revealed that the subject multilayer structure is an excellent odor, flavor and aroma barrier that can be used to protect flavor sensitive products.

Table 1 shows that comparative Example 1 is a poor structure in so far as the transmission of water vapor and oxygen transmission is concerned. Comparative Example 1 also does not provide an excellent surface for the bonding of metal thereto. The structure of comparative Example 1 also could not if on a hermetic seal. Example 2 shows that the addition of an EVOH copolymer layer causes a dramatic drop in the amount O₂ transmitted and is an aroma barrier in comparison to comparative Example 1. Example 2 shows that this structure has significant resistance to metal pickoff by the tape test. A hermetic seal could not be formed with the structure. Example 3 shows no decrease in the amount of water vapor transmission and aroma barrier and the greater thickness of the heat seal ethylene-propylene-butene-1 copolymer layer permitted the formation of an hermetic seal. Comparative Example 4, which did not employ an EVOH layer, showed that the oxygen transmission had again increased greatly to 125 grams per 6.5 x 10⁻²m² (100in²) per 24 hrs. It was not effective as an aroma barrier. In addition, there was no meaningful adhesion of the metal to the metal receiving untreated propylene layer. Example 5 of Table 1 again demonstrates the effectiveness of EVOH in minimizing oxygen transmission and metal pickoff even without any surface treatment prior to metallization. A hermetic seal could be formed with this structure. In all cases Table 1 shows that the structures had a Tappi opacity of 71.

Table 2 illustrates the properties of the structures after metallization. By metallizing comparative Example 1 the water vapor transmission was reduced by a significant amount to 0.15 grams per 6.5 x 10⁻²m² (1OOin²) per 24 hours. The metallization alone caused a significant reduction in the oxygen transmission however the structure was not effective as an aroma barrier. In addition, a hermetic seal could not be formed with the structure. Example 2 showed that the combination of the EVOH copolymer and metallization produced the water vapor transmission and the oxygen transmission down to 0.01 grams per 6.5 x 10⁻²m² (100 in²) per 24 hours and 0-0lcc per 6.5 x 10⁻²m² (100 in²) per 24 hours respectively. In addition, the structure was effective as an aroma barrier. A hermetic seal still could not be formed with this structure. Example 3 showed that a significant increase in the thickness of the heat seal permitted the formation of an hermetic seal. Comparative Example 4 again shows that the elimination of the EVOH layer is not compensated for by a metallization layer in so far as oxygen transmission and aroma barrier is concerned. Example 5 illustrates that the structure with the untreated EVOH layer in combination with the metallization reduces the water vapor transmission to a rate of 0.005 grams per 6.5 x 10⁻²m² (100 in²) per 24 hours and reduces the oxygen transmission to a level of 0.01. This structure is an aroma barrier. Examples 2, 3 and 5 also illustrate that high lamination bonds are formed with these structures.

Table 3 shows the multi-layer structure properties after lamination to a polymeric film structure. Comparative Example 1 which shows the structure laminated to oriented polypropylene is a poor structure as far as oxygen transmission is concerned. In addition the structure is not an effective aroma barrier and does not permit the formation of hermetic seals. In commercial machinery which forms packaging pouches, the machinability of the structure is merely acceptable. Example 2 shows that the structure with EVOH and oriented polypropylene as the laminate is effective as regards water vapor transmission, oxygen transmission, aroma barrier but is not acceptable in the formation of a hermetic seal. Example 3 with a decreased thickness of EVOH and an increased thickness of the heat seal is effective from a water vapor and oxygen transmission standpoint. It also is effective as a aroma barrier structure and it does form hermetic seals. Like comparative example 1 and example 2 it is merely acceptable as far as machinability is concerned. Comparative Example 4 again shows that without the EVOH oxygen transmission is significantly higher and the structure is not an effective aroma barrier. Example 5 shows excellent commercial characteristics in all respect, including, low water vapor transmission and low oxygen transmission. It is an effective aroma barrier and produces hermetic seals and is excellent as far as machinability is concerned.

## Claims

1. A biaxially oriented multilayer film structure comprising:
(A) a core layer of polypropylene which is oriented greater in the transverse direction than in the machine direction and which has dispersed therein microspheres sufficient in size and quantity so that, during orientation the core layer becomes opaque as a result of formation of voids, which either includes a minor proportion of a maleic anhydride modified polypropylene blended therein and/or has a skin layer (B) of maleic anhydride modified polypropylene on one side;
(C) a layer of ethylene vinyl alcohol (EVOH) copolymer on the maleic anhydride modified polypropylene containing layer, and
(D) on the other side of the core layer a heat sealable or printable skin layer; wherein the film structure carries a metal layer on the EVOH copolymer layer.

2. A film structure according to claim 1 obtainable by orientation in the machine direction from 3 to 7 times and in the transverse direction from 7 to 12 times.

3. The structure of any preceding claim obtainable by treating the EVOH copolymer layer to a surface free energy of greater than 33 dynes/cm.

4. The structure of any preceding claim obtainable by treating the EVOH copolymer layer by corona discharge or by flame treatment.

5. The structure of any preceding claim wherein the metal layer comprises aluminum.

6. The structure of any preceding claim wherein a polymeric film is laminated to the metal layer.

7. The structure of claim 6 wherein the polymeric film comprises oriented or unoriented, transparent or opaque polyolefin.

8. The structure of claim 7 wherein the lamination is effected by a low density polyethylene adhesive.

9. The structure of any preceding claim wherein the heat sealable skin layer comprises an olefin homopolymer, copolymer or terpolymer.

10. The structure of claim 9 wherein the terpolymer comprises an ethylene/propylene/butene-1 terpolymer.

## Patentansprüche

1. Biaxial orientierte, mehrschichtige Folienstruktur, welche umfaßt:
(A) eine Kernschicht aus Polypropylen, die in Querrichtung stärker orientiert ist als in Maschinenrichtung, und in der Mikrosphären mit ausreichender Größe und in einer ausreichenden Menge dispergiert sind, so daß die Kernschicht während der Orientierung aufgrund der Entstehung von Hohlräumen undurchsichtig wird, die entweder einen geringen Teil von mit Maleinsäureanhydrid modifiziertem Polypropylen einschließt, das darin eingemischt ist, und/oder auf einer Seite eine Hautschicht (B) aus mit Maleinsäureanhydrid modifiziertem Polypropylen aufweist,
(C) eine Schicht eines Copolymers aus Ethylen-Vinylalkohol (EVOH) auf der das mit Maleinsäureanhydrid modifizierte Polypropylen enthaltenden Schicht und
(D) auf der anderen Seite der Kernschicht eine heißsiegelfähige oder bedruckbare Hautschicht, wobei die Folienstruktur auf der Schicht des EVOH-Copolymers eine Metallschicht trägt.

2. Folienstruktur nach Anspruch 1, die durch 3- bis 7faches Orientieren in Maschinenrichtung und 7- bis 12faches Orientieren in Querrichtung erhalten werden kann.

3. Struktur nach einem der vorstehenden Ansprüche, die dadurch erhalten werden kann, daß die Schicht des EVOH-Copolymers bis zu einer freien Oberflächenenergie von mehr als 33 dyne/cm behandelt wird.

4. Struktur nach einem der vorstehenden Ansprüche, die dadurch erhalten werden kann, daß die Schicht des EVOH-Copolymers mit Coronaentladung oder Flammbehandlung behandelt wird.

5. Struktur nach einem der vorstehenden Ansprüche, wobei die Metallschicht Aluminium umfaßt.

6. Struktur nach einem der vorstehenden Ansprüche, wobei ein Polymerfilm mit der Metallschicht laminiert ist.

7. Struktur nach Anspruch 6, wobei der Polymerfilm orientiertes oder nichtorientiertes, transparentes oder undurchsichtiges Polyolefin umfaßt.

8. Struktur nach Anspruch 7, wobei das Laminieren mit einem Kleber aus Hochdruck-Polyethylen erfolgt.

9. Struktur nach einem der vorstehenden Ansprüche, wobei die heißsiegelfähige Hautschicht ein Olefin-Homopolymer, -Copolymer oder -Terpolymer umfaßt.

10. Struktur nach Anspruch 9, wobei das Terpolymer ein Ethylen/Propylen/Buten-1-Terpolymer umfaßt.

## Revendications

1. Une structure de film multicouche à orientation biaxiale comprenant :
(A) une couche centrale de polypropylène qui est orientée davantage dans le sens transverse que dans le sens machine et qui renferme, dispersées en son sein des microsphères suffisantes en taille et en quantité pour que, lors de l'orientation, la couche centrale devienne opaque du fait de la formation de lacunes, qui soit comprend une proportion mineure de polypropylène modifié par l'anhydride maléique mélangé avec lui et/ou comporte une couche de peau (B) de polypropylène modifié par l'anhydride maléique sur une des faces :
(C) une couche de copolymère éthylène alcool vinylique (EVOH) sur la couche contenant le polypropylène modifié à l'anhydride maléique et,
(D) sur l'autre face de la couche centrale, une couche de peau thermosoudable ou imprimable dans laquelle la structure de film supporte une couche métallique sur la couche de copolymère d'EVOH.

2. Une structure de film selon la revendication 1, pouvant être obtenue par orientation dans le sens machine de 3 à 7 fois et dans le sens transverse de 7 à 12 fois.

3. La structure selon l'une quelconque des revendications précédentes pouvant être obtenue par traitement de la couche de copolymère d'EVOH jusqu'à l'obtention d'une énergie libre superficielle supérieure à 33 dynes/cm.

4. La structure selon l'une quelconque des revendications précédentes pouvant être obtenue par traitement de la couche de copolymère d'EVOH par décharge corona ou par traitement à la flamme,

5. La structure selon l'une quelconque des revendications précédentes, dans laquelle la couche métallique comprend de l'aluminium.

6. La structure selon l'une quelconque des revendications précédentes, dans laquelle on stratifie un film polymère sur la couche métallique.

7. La structure selon la revendication 6, dans laquelle le film de polymère comprend une polyoléfine orientée ou non orientée, transparente ou opaque.

8. La structure selon la revendication 7, dans laquelle la stratification est effectuée à l'aide d'un polyéthylène basse densité comme adhésif.

9. La structure selon l'une quelconque des revendications précédentes dans laquelle la couche de peau thermosoudable comprend un homopolymère, copolymère ou terpolymère d'oléfine.

10. La structure selon la revendication 9, dans laquelle le terpolymère comprend un therpolymère éthylène/propylène/butène-1.
